# EUROPEAN PATENT APPLICATION

(11) **EP 4 421 191 A1**
(43) Date of publication of application: **28.08.2024**
(21) Application number: 22882697.0
(22) Date of filing: 11.10.2022
(51) Int. Cl.: C21D 9/46, B21D 22/02

(54) **HOT STAMPING FORMING METHOD FOR PRE-COATED STEEL PLATE**

(30) Priority: 21.10.2021 CN 202111226071
(71) Applicant: The University of Hong Kong, Hong Kong (CN)
(72) Inventor: HUANG, Mingxin, Hong Kong (CN); WANG, Zhou, Hong Kong (CN)
(74) Representative: HGF
(86) International application number: PCT/CN2022/124636
(87) International publication number: WO 2023/066087

(57) **Abstract**

The invention provides a hot stamping method for pre-coated steel plate, comprising performing a preliminary heat treatment to the pre-coated steel plate before the hot stamping, the preliminary heat treatment comprising: (1) a step of heating and temperature holding: heating the pre-coated steel plate to 850 - 920 °C and temperature holding for 7 to 15 minutes, or heating to 920 - 960 °C and temperature holding for 5 to 10 minutes; (2) a step of cooling: cooling the pre-coated steel plate to below 300 °C after the step of heating and temperature holding at a cooling rate not less than 5 °C/s; and (3) optionally repeating the above step of heating and temperature holding and the step of cooling one or more times. The preliminary heat treatment can increase the alloying degree of the pre-coating layer, reduce the carbide structures in the steel plate matrix, obtain martensite and/or bainite matrix structure, so as to reduce the damage to a stamping die caused by the pre-coating layer during the stamping and deforming under a high temperature, refine the grains, and improve the fracture performance of the finished hot stamped member.

## Description

The application claims the priority of the Chinese patent application 202111226071.X filed on October 21, 2021, the content of which is incorporated by reference herein in its entirety.

### Technical Field

The invention relates to a hot stamping method for pre-coated steel plate.

### Background

With the objectives of "carbon peak" and "carbon neutral" proposed, energy conservation and emission reduction for vehicles have become top priorities, and the light weight of vehicle is then an effective way of implementing the same. Among numerous lightweight materials, ultra-high strength steel is an idea material for achieving lightweight while ensuring the safety of vehicle because of its advantages such as high strength, low cost, mature technology, etc.

Hot stamping means a process of stamping and forming a completely austenitizing steel plates under high temperature while cooling the same quickly, and finally obtaining the ultra-high strength steel component. The hot stamping process has advantages of high precise for formation, good effect of reducing weight, etc., and is especially suitable for forming of the complex and integrated thin-walled components, for example, A pillar, B pillar, back top beam or the like of a car body in white.

In the process of actual hot stamping, in order to avoid the oxidation and the decarburization on the surface of the steel caused by high temperature, pre-coating would be applied on the surface of the steel plate. Among them, the most widely used method was described in the patent for anti-high temperature Al-Si coating invented by the company ArcelorMittal in 1999, and the commercialization of the hot formed steel plate with the above mentioned Al-Si coating was achieved in 2007. However, in more than 20 years since the invention of the Al-Si plating, the problem of contradiction between the alloying degree of the pre-coating and the fracture performance of matrix of the steel plate remains unsettled.

Firstly, one of the problems is to increase the alloying degree of the pre-coating.

If the alloying degree is not enough, scaling and wear of the pre-coated steel plate would occur in locations of furnace rollers, forming die and the like, which is very adverse to the practical production. In the meanwhile, insufficient alloying degree would cause relatively low proportion of ductile phase and relatively high brittle phase in the intermetallic compound of the, forming plating cracks easily and having impact on the performance of coating, resistant to corrosion, etc. of the pre-coated steel plate.

During the process of hot stamping of the pre-coated steel plate, in order to ensure the alloying degree, it is generally used relatively high heating temperature and relatively long time for austenitizing step. For example, CN101583486B (hereinafter referred to as patent document 1) discloses a process of hot stamping of pre-coated steel, which is the prevailing producing process for pre-coated steel currently and in which it is specified the process of heating and temperature holding for austenitizing when the Al-Si coating has a thickness of 20-33 µm: when the steel plate has a thickness of 0.7-1.5 mm, the temperature and the time are defined within a quadrilateral composed of (3 minutes, 930 °C), (6 minutes, 930 °C), (13 minutes, 880 °C) and (4.5 minutes, 880 °C); when the steel plate has a thickness of 1.5 - 3 mm, the temperature and the time are defined within a quadrilateral composed of (4 minutes, 940 °C), (8 minutes, 940 °C), (13 minutes, 900 °C) and (6.5 minutes, 900 °C). The above invention patent also specifies the ratio of Fe₂Al₅ phase to FeAl phase in the pre-coating microstructure after the hot stamping, to ensure the performance of coating, welding, resistant to corrosion and etc. of the pre-coated steel member after the hot stamping.

The second problem is how to enhance the fracture performance of the pre-coated steel plate matrix.

For enhancing the fracture performance, it is generally used relatively low heating temperature and relatively short time for temperature holding to avoid the austenite grains to grow excessively under high temperature. However, the above requirement and that of increasing the alloying degree of the pre-coating layer conflict with each other. The techniques in prior art can only find compromise between them, but cannot both enhance the alloying degree of the pre-coating layer and the fracture properties of the steel plate matrix.

It is worthy to notice that the present hot stamped member of the pre-coated steel still cannot satisfy the criteria for fracture performance for all automobile factories. The above-mentioned fracture performance involves low-temperature fracture, bending fracture, hydrogen induced delay fracture and etc. Non-ideal low-temperature fracture, bending fracture, or hydrogen induced delay fracture properties each may cause the local cracks and failure of the car body members during the service or collision of the car, which endangers the safety of passenger(s). Especially, the Al-Si coating may be alloyed under high temperature to form brittle intermetallic compound, brittle high alumina high silicon ferrite and brittle high carbon martensite, and these brittle structures will further decrease the fracture performance of the hot stamped steel member. In the practical industrial manufacture, after hot forming, the fracture performance of the pre-coated steel plate is significantly lower than that of the steel plate without pre-coating layer.

Additionally, the windows for the temperature holding and the process time of the present hot forming process are narrow, causing a high requirement for practical industrial production.

For example, CN106466697B (hereinafter referred to as patent document 2) discloses another hot stamping process for Al-Si plating pre-coated steel plate, in which it is specified the process of heating and temperature holding of 900 - 950 °C and 2.5-10 minutes, preferably the heating furnace temperature is 935 - 950 °C or945 - 950 °C, and preferably the holding time is 2.5 - 5 minutes. Although the temperature in the heating and temperature holding process in the patent document 2 is only slightly higher than that in the patent document 1, in the practical production, the temperature in the patent document 2 may cause austenite grains in the steel plate matrix excessive large, the fracture performance non-desirable, and difficulty to apply to car body parts practically.

In summary, the current hot forming process is unable to improve the alloying degree of pre-coating layer and the steel plate matrix fracture performance, especially, it is an urgent need for improving the fracture performance of the pre-coated steel plate to satisfy the fracture performance criteria in the automobile industry. In addition, expanding the hot forming process windows based on the present hot forming process is also benefit to the practical industrial production.

### SUMMARY

Therefore, an objective of the invention is to solve the above problem which is a technical bottleneck, by providing a hot stamping method which can improve alloying degree of pre-coating layer of hot stamped steel plate, a hot stamping method which can improve fracture performance of hot stamped steel plate or a hot stamping method which can improve alloying degree and fracture performance of plate pre-coating layer of hot stamped steel at the same time. Another objective of the invention is to expand the processing intervals of temperature and time for the process of hot stamping, to enhance the stability of the process of hot stamping.

The inventor found that performing preliminary heat treatment to a pre-coated steel plate before hot stamping may achieve the above objectives effectively. This preliminary heat treatment mainly comprises a step of heating and temperature holding and a step of cooling.

Based on this, the invention provides a hot stamping method for pre-coated steel plate, comprising performing a hot stamping on a pre-coated steel plate using a die at a hot stamping temperature to obtain a hot stamped component, wherein the method further comprises performing a preliminary heat treatment to the pre-coated steel plate before the hot stamping, the preliminary heat treatment comprising:
(1) a step of heating and temperature holding: heating the pre-coated steel plate to 850 - 920 °C and temperature holding for 7 to 15 minutes, or heating the same to 920 - 960 °C and temperature holding for 5 to 10 minutes, for austenitizing pre-coated steel plate matrix and alloying a pre-coating layer;
(2) a step of cooling: cooling the pre-coated steel plate to below 300 °C after the step of heating and temperature holding at a cooling rate not less than 5 °C/s; and
(3) optionally, repeating the above step of heating and temperature holding and the step of cooling one or more times.

In one implementation of the invention, in addition to ferrum, the pre-coated steel plate matrix comprises, the following composition represented by weight percentage: carbon 0.2-0.4%; manganese 0.5-1.5%; boron 0-0.005%; one or more alloying element(s) not more than 1%, selected form aluminum, silicon, chromium, molybdenum, niobium, vanadium; and other inevitable impurities.

In another implementation of the invention, in addition to ferrum, the pre-coated steel plate matrix further comprises the following composition represented by weight percentage: carbon 0.3-0.5%; manganese 0.5-2.5%; boron 0-0.005%; one or more alloying element(s) not more than 3%, selected form aluminum, silicon, chromium, molybdenum, niobium, vanadium; and other inevitable impurities.

Increasing the content of carbon, manganese and silicon may increase the hardenability of the steel plate matrix, in the meanwhile it is easy to obtain martensite after the preliminary heat treatment, to achieve an effect of refining grains. However, the excessive content of carbon, manganese, silicon may have adverse impact on the fracture performance of the steel plate matrix. Adding a small amount of boron can increase the hardenability of the steel plate matrix without affecting the fracture performance. Aluminum may be deoxidized in smelting process, and protect the effectiveness of boron. Other elements such as chromium and molybdenum etc. can also increase the hardenability, but adversely, increase the cost of the steel plate significantly. Vanadium and niobium can, on one hand, refine the austenite grains, and on the other hand, have precipitation hardening effect, to enhance the strength of the hot stamped member. As a preferable instance, the pre-coated steel plate matrix may be selected as 22MnB5 or 34MnB5 steel which can be purchased on the market.

In an implementation of the invention, the pre-coated steel plate matrix has a thickness of 0.8 - 2.5 mm, the pre-coating layer has a thickness of 6 - 36 µm. In some implementations, the pre-coating layer has a thickness of 15 - 27 µm. In some specified implementations, the pre-coated steel plate matrix has a thickness of 1.0 - 1.3 mm, which is a typical thickness of the steel plate used for safety components of car body in white.

In some implementation of the invention, the pre-coating layer includes aluminum or aluminum alloy, the pre-coating layer is provided on at least one surface of the pre-coated steel plate, and the initial thickness of the pre-coating layer on each of the surfaces is less than 36 µm.

In some specified implementations, the pre-coating layer is an Al-Si alloy coating, generally comprising, by weight percentage, Si 8-11%, Fe 2-4%, Al 85-90% and impurity which is inevitable. Al mainly provides stability at high temperature and resistance to oxidation of the coating, but adversely, Al will be alloyed with the steel plate matrix under high temperature, forming brittle intermetallic compound, Si may restrain the growth of the intermetallic compound, to reduce the damage of the brittle intermetallic compound to the fracture performance of the steel plate.

As an example, commercial Al-Si pre-coated 22MnB5 steel was used, wherein the 22MnB5 steel plate matrix has the following content by weight percentage: C 0.20 - 0.23 %, Mn 0.9 - 1.4%, and Si 0.20 - 0.28%, and additionally, the pre-coated Al-Si coating has a thickness of around 25µm.

As a preferable implementation, when the thickness of the pre-coating layer is less than 20µm, the step of heating and temperature holding is performed at 850 - 920 °C, for 7 to 15 minutes; when the thickness of the pre-coating layer is greater than or equal to 20 µm, the step of heating and temperature holding is performed at 920 - 960 °C, for 5 to 10 minutes. In some implementations, the pre-coating layer is an Al-Si plating, and when the thickness of the Al-Si plating is less than 20 µm, the temperature holding has a range of 870 - 915 °C and a total time of 2 - 7 minutes; when the thickness of the Al-Si plating is greater than or equal to 20 µm, the temperature holding has a range of 890 - 935 °C and a total time of 4 - 9 minutes.

The selection of the process of heating and temperature holding in preliminary heat treatment is mainly to ensure the alloying of the coating and the obtaining of suitable intermetallic compound structure. When the pre-coating layer is aluminum or aluminum alloy, the intermetallic compound comprises FeAl phase with its volume fraction not less than 60%. Compared to other intermetallic compound, FeAl phase has advantages of high melting point, good fracture toughness etc., which can reduce the loss of the stamping die, and at the same time can reduce the coating cracks, and enhance the fracture performance of the steel plate as well as the resistant to corrosion and the like.

Additionally, during the preliminary heat treatment, the poor effect caused by the growth of the steel plate matrix austenite may be eliminated or remedied by the martensite or bainite structure resulted after cooling. The martensite or bainite structure mentioned above may provide more austenite nucleation points in the subsequent hot stamping and refine the austenite structure to improve the fracture performance of the steel plate matrix. Thus, the process ranges of the preliminary heat treatment according to the invention are greater than those of the existing hot stamping process, which is beneficial to improve the stability of the process.

The cooling rate in the preliminary heat treatment depends mainly on the hardenability of the steel plate matrix. It is needed to specify that, the cooling rate of around 5 °C/s cannot avoid the formation of carbide completely, and cannot obtain a microstructure of full martensite or bainite. However, the inventors found that a small amount of martensite or bainite microstructure (not less than 30%, or the sum of volume fractions of the two not less than 30%) is capable of playing a role of refining the austenite grains during the subsequent hot stamping. In the meanwhile, uniformly distributed carbide may also provide amounts of austenite nucleation locations during heating, playing the effect of refining the austenite grains.

Preferably, the cooling rate is not less than 10 °C/s, in this situation, the martensite volume fraction after cooling can reach above 50%, pearlite would not be formed, and the size of carbide particles is not greater than 0.1 µm. More preferably, the cooling rate is not less than 25 °C/s, in this situation, the martensite volume fraction after cooling approaches 100%. However, when the cooling rate is increased to 50 °C/s, it is not significant that the prior austenite grains are further refined, and the fracture performance after the subsequent hot stamping have little improvement. Therefore, most preferably, the cooling rate is 25 °C/s to 50 °C/s.

During the practical production, it needs a very long time to cool the above-mentioned steel plate after preliminary heat treatment to a room temperature, and the cooling rate will slow down apparently especially when the temperature is below 200 °C. In order to increase the production efficiency, as a preferable solution, when the steel plate is cooled to a temperature below 300 °C and above 200 °C after the step of preliminary heat treatment, the steel plate will be transferred to a heating furnace, beginning with reheating. In this situation, the martensite transformation during the cooling has been completely or almost completely finished, which is sufficient for refining the prior austenite grains and improving the final fracture performance of the steel plate.

Preferably, the pre-coated steel plate may be deformed using a stamping die during the cooling process of the preliminary heat treatment. On one hand, the amount of deformation during the subsequent hot stamping may be reduced, the requirement for temperature in the subsequent hot stamping may be reduce, and the process windows of heating and temperature holding in the subsequent hot stamping are enlarged; on the other hand, the heating and temperature holding in the subsequent hot stamping can fill the plating cracks caused by the pre-deformation, and at the same time, the amount of deformation required by the subsequent hot forming process is reduced, both the quantity and depth of the plating cracks caused will be reduced, and thus the resistant to corrosion of the pre-coating layer can be improved, decreasing the adverse impact on the fracture performance by the plating cracks.

Preferably, several preliminary heat treatments are applied to the steel plate, and same or different processing parameters between the several preliminary heat treatments can be used. Through the transformation back and forth between high temperature austenite and room temperature martensite, the refining extent of the grains can be increased. In the meanwhile, using different processing parameters between the several preliminary heat treatments may provide more possibility for the design of the Fe-Al diffusion layer and intermetallic compound layer in the pre-coating layer (such as Al-Si plating). In view of this, the chemical component and the microstructure of the steel plate matrix subjected to the preliminary heat treatments for several times, the grains can be refined better, and at the same time the alloying degree of the pre-coating layer is higher.

Additionally, during the preliminary heat treatment, the poor effect brought by the growth of the austenite of the steel matrix may be eliminated or remedied by the martensite or bainite structure resulted from cooling. The martensite or bainite structure mentioned above may provide more austenite nucleation points in the subsequent hot stamping, refining the austenite structure to improve the fracture performance of the steel plate matrix. Therefore, the process ranges of the preliminary heat treatment of the invention are larger than those of the existing hot stamping process, benefiting to improve the stability of the process.

According to the hot stamping method used for pre-coated steel plate provided by the invention, the pre-coated steel plate matrix after the preliminary heat treatment has a microstructure with the following features:
(a) volume fraction of martensite or of bainite or of a sum of both is not less than 30%;
(b) there is no spherulitic carbide grains with grain diameter greater than 0.5 µm, and there is no laminar pearlite colony with grain diameter greater than 1 µm.

In the method, the microstructure of the pre-coating layer after preliminary heat treatment is composed of one or more intermetallic compound(s) and ferrite, wherein, FeAl phase has a volume fraction of not less than 60% among all intermetallic compounds.

In some implementations of the invention, the hot stamping method further comprises: after the preliminary heat treatment, reheating the pre-coated steel plate to 780 - 940 °C and holding the temperature for 1 to 7 minutes, for completely austenitizing the pre-coated steel plate matrix; then keeping the temperature above 500 °C and transferring the pre-coated steel plate to the die for hot stamping.

Preferably, the hot stamping method additionally comprises: after the preliminary heat treatment, reheating the pre-coated steel plate to 830 - 900 °C and temperature holding for 1 to 4 minutes, for completely austenitizing the pre-coated steel plate matrix; then, keeping the temperature above 600 °C and transferring the pre-coated steel plate to the die for hot stamping.

Preferably, in the step of reheating, the temperature holding has a range of 830 - 900 °C, and the total time for heating and temperature holding is 1 - 4 minutes.

It is more important that, with the original austenite grains in the hot stamped steel refined, the martensite lath bundle, the lath block and the lath are all refined, finally improving the fracture performance of the hot stamped member.

In some implementations of the invention, a microstructure of the pre-coated steel plate matrix after hot stamping is a full martensite structure.

In some other implementations of the invention, a microstructure of the pre-coated steel plate matrix after hot stamping is a mixed structure composed of two or more phases of ferrite structure, bainite structure, martensite structure, austenite structure. In this situation, the strength of the hot stamped member is decreased and the fracture performance is improved.

Further, a microstructure of the pre-coated steel plate matrix after hot stamping has an original austenite grain size not greater than 18 µm. As a preferable solution, the size of original austenite grains in the microstructure of hot stamped member is not greater than 10 µm. Here, since the refining extent of the grains is higher, the fracture performance of the hot stamped steel is better.

The microstructure of the above-mentioned hot stamped steel plate matrix is generally a full martensite structure, and in this situation, the strength of the hot stamped steel may reach 1.5 GPa.

In some implementations of the invention, the steel plate is transferred to the heating furnace for reheating and for hot stamping after the preliminary heat treatment. As a preferable solution, when the steel plate is cooled to a temperature below 300 °C and above 200 °C after the step of preliminary heat treatment, the steel plate is transferred to the heating furnace, beginning with the reheating. In this situation, the martensite transformation during the cooling has been completely or almost completely finished, which is sufficient for refining the austenite grains and improving the final fracture performance of the steel plate. Transferring the steel plate to the heating furnace at a temperature above 200 °C may increase the production efficiency and save the energy at the same time.

As another preferable solution, when the steel plate is cooled to a temperature below 200 °C and above 100 °C after the step of preliminary heat treatment, the steel plate is transferred to the heating furnace, beginning with the reheating. Compared to the previous solution, the present solution is more suitable for the situation in which the alloy content of the pre-coated steel plate matrix is relatively high and the temperature for martensite transformation is relatively low.

The hot stamping method of the invention can refine the original austenite grains because of the following factors: (A) during the course of heating and temperature holding of the preliminary heat treatment, the pre-coating layer has been alloyed, forming an intermetallic compound layer and a diffusion layer, and during the hot stamping, the alloying of the pre-coating layer is no longer a main factor in consideration, and thus low temperature for heating and temperature holding and short time for temperature heating and holding can be used, restraining the growth of the austenite grains; (B) during the cooling of the preliminary heat treatment, the steel plate matrix forms full or partial martensite or bainite structure, those structures have characteristics of tiny grains, high defect concentration, etc., and in the steel plate matrix the carbide is distributed in a more tiny and uniform manner, providing more austenite nucleation sites during the reheating of the hot stamping and finally refining the prior austenite grains.

The technique of the invention improves the fracture performance because of the following reasons: the techniques of the hot stamping of the invention refines the original austenite grains, the martensite lath bundle, the martensite lath block and the martensite lath in the microstructure of the hot stamped component. On one hand, the refining of the grains mentioned above decreases the enrichment of impurity element such as phosphorus, sulphur, etc, as well as hydrogen at grain boundaries, remedies the adverse impact of the impurity elements and hydrogen on grain boundary fracture, so as to restrain the brittle intergranular fracture. On the other hand, with the refining of grains, the cracks need to pass through more high angle grain boundary during expanding, including the original austenite grain boundaries, the martensite lath bundle boundaries, martensite lath block boundaries, etc., and thus the expanding of the cracks needs more energy and has more difficulty, therefore it finally improves the fracture performance of the hot stamped member.

Therefore, according to the hot stamping method provided by the invention, the preliminary heat treatment can increase the alloying degree of the pre-coating layer, reduce the fraction of carbide structure in the steel plate matrix, obtain the martensite and/or bainite matrix structure, so as to reduce the loss of stamping die caused by the pre-coating layer during the stamping and deforming under a high temperature, refine the grains, and improve the fracture performance of the finished hot stamped member.

The hot stamping method of the invention can be used for the safety structure parts of car, reinforced structure parts, wheel members, and car structure parts with high hardness, including but not limited to A pillar, B pillar, back top beam, etc. of a car body in white.

### EXPLANATION FOR DRAWINGS

In the following, the implementations of the invention will be described in detail in combination with drawings, in which:
Fig. 1 is a schematic view showing the hot stamping method in the prior art;
Fig. 2 is a schematic view showing the hot stamping method of the invention;
Fig. 3 is a view showing original microstructure structure of a pre-coating layer and a steel plate matrix of 22MnB5 steel plate used in an embodiment;
Fig. 4 is a schematic view showing the microstructure of an Al-Si plating after preliminary heat treatment in embodiments 1 - 3 of the invention;
Fig. 5 shows variation of a ratio of total volume fraction of FeAl phase to intermetallic compound with the temperature holding time in the pre-coating layer after the preliminary heat treatment in the embodiments 1 - 3;
Fig. 6 is a view showing the microstructure of a steel plate matrix after preliminary heat treatment in an embodiment 2 of the invention;
Fig. 7 is a view showing the microstructure of the steel plate matrix after hot stamping in an embodiment 4 of the invention;
Fig. 8 is an inverse pole figure showing the microstructure of the steel plate matrix after hot stamping in the embodiment 4 of the invention;
Fig. 9 is an inverse pole figure showing the microstructure of the steel plate matrix after hot stamping using prior art; and
Fig. 10 shows a comparison among results of three-point bending test of pre-coating hot stamped steel plate obtained according to the embodiment 4 of the invention and obtained according to prior art.

### IMPLEMENTATIONS

Further detailed description of the invention will be given combined with implementations in the following, and the embodiments are merely for the purpose of explaining the invention but not limiting the scope of the invention.

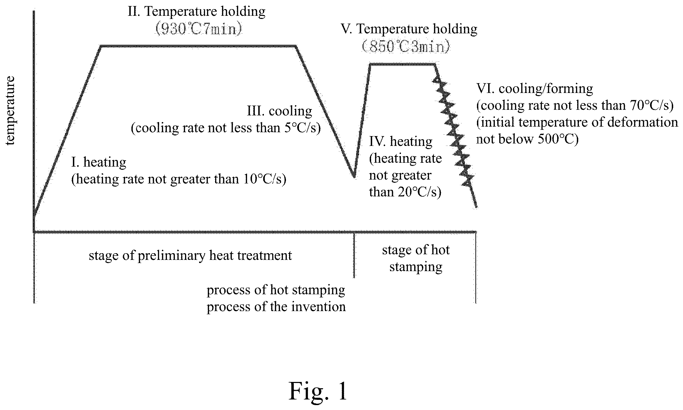

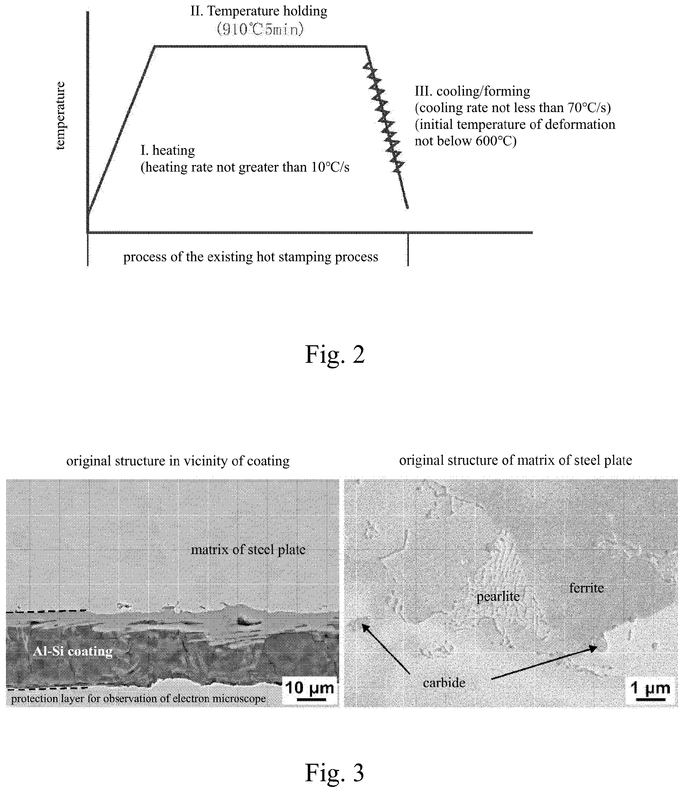

To explaining the hot stamping method of the invention specifically, Fig. 1 and Fig. 2 respectively summarize an implementation of hot stamping process of the invention and that of hot stamping method of the prior art. It should be noted that the invention is not limited to the embodiment shown in the drawings, the slopes in the drawings is merely schematic indication for average speeds of heating or temperature decreasing, but not indicates the heating or cooling graphs in real situations.

The pre-coating Al-Si layer of the 22MnB5 steel plate used in an embodiment and the original microstructure of the steel plate matrix are shown in Fig. 3. The pre-coating layers comprises from the side of steel plate matrix in sequence: Si-enriched intermetallic compound layer, Al layer. This structure of pre-coating Al-Si plating is a typical structure of the pre-coating plating of 22MnB5 steel which can be obtained in the market. The steel plate matrix mainly consists of ferrite, pearlite and carbide, wherein the size of the laminar pearlite colony may reach above 2 µm and the diameter of the spherulitic carbide may reach above 0.5 µm.

### Embodiments 1 - 3

The following preliminary heat treatments are applied to the pre-coating 22MnB5 steel plate:
(1) heating three of the pre-coated steel plates to 930 °C, and temperature holding for 1 minutes (embodiment 1), 5 minutes (embodiment 2) and 10 minutes (embodiment 3) respectively, for austenitizing the pre-coated steel plate matrix, alloying the pre-coating layer;
(2) cooling the steel plate to a room temperature at cooling rate of 300 °C/s after completing the step of heating and temperature holding.

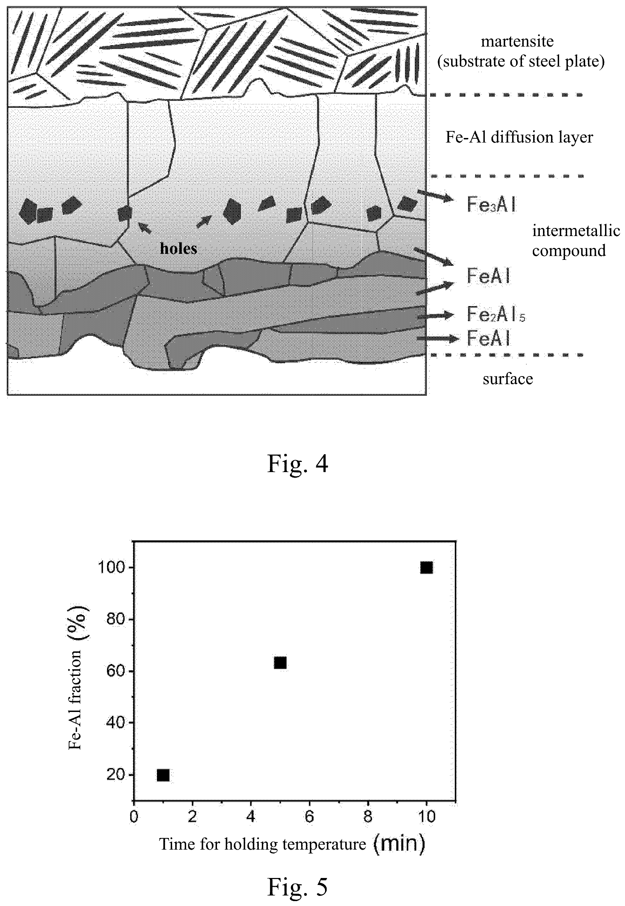

After the preliminary heat treatment, the Al-Si plating in the above steel plate is alloyed, the microstructure of which is shown in Fig. 4. The microstructure comprises, starting from the side of steel plate matrix, in sequence: a Fe-Al diffusion layer mainly containing ferrite structure, and an intermetallic compound layer mainly containing FeAl and Fe₂Al₅, wherein the Fe-Al diffusion layer has a thickness of 4 to 30 µm and the intermetallic compound layer has a thickness of 15 to 40 µm.

Fig. 5 shows variation of ratio of total volume fraction of FeAl phase to intermetallic compound with the temperature holding time. Compared to the Fe₂Al₅ phase, FeAl has a higher melting point and fracture toughness, and may reduce the adverse influence by furnace roller scaling, die wear and the like problems. In the present embodiment, FeAl phase has a volume fraction not less than 60 % among all the Fe-Al intermetallic compound.

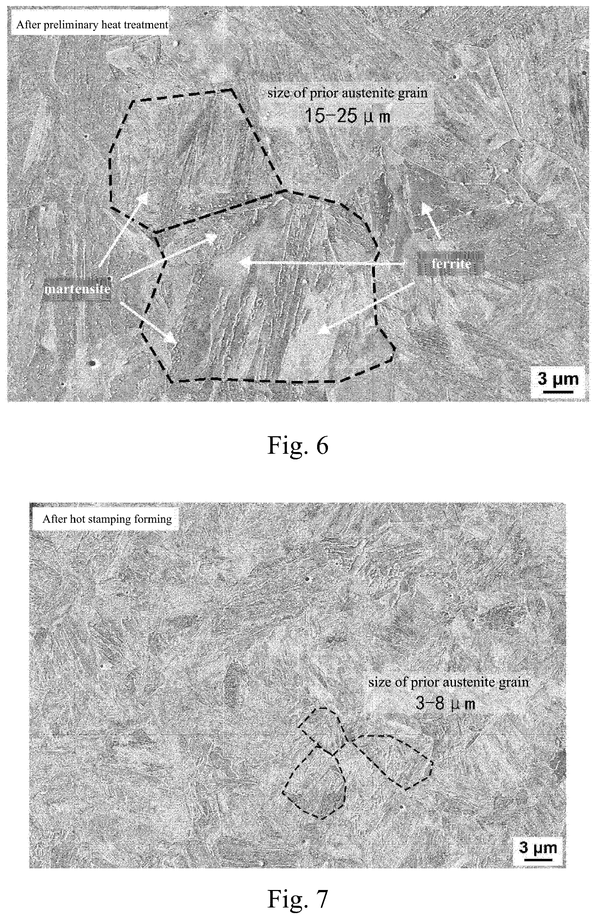

In the embodiment 2, the microstructure of the steel plate matrix after preliminary heat treatment is shown in Fig. 6, wherein there is no spherulitic cementite grains with grain diameter greater than 0.5µm, and there is no laminar pearlite colony with grain diameter greater than 1 µm; the volume fraction of martensite or the volume fraction of bainite, or the volume fraction of both is not less than 30%.

Numerous parallel tests demonstrate: although the cooling rate and the temperature of the present embodiment do not fall with the optimum range of conditions of the invention, it will not impact the microstructure and conclusion in this embodiment. That is to say, the microstructure and conclusion based on the optimum cooling rate range and temperature range of the invention are almost the same as those achieved in the above embodiment. However, those optimum ranges of conditions are more beneficial for industrial production.

### Embodiment 4

Re-heating and hot stamping the steel plate obtained in the embodiment 2:
(3) reheating the steel plate to 850 °C and temperature holding for a total time of 1.5 minutes, for completely austenitizing said steel plate;
(4) transferring the heated steel plate into a die, and it is ensured that the temperature of the heated steel plate is above 500 °C when arriving at the die;
(5) hot stamping the heating steel plate in the die, and obtaining a finished hot stamped steel member.

Fig. 7 shows a microstructure structure of the steel plate matrix after the process of the hot stamping. After hot stamping, the steel plate matrix obtains full martensite structure, and the original austenite grains in the microstructure are refined obviously, the size of the original austenite grain decreases from 15 - 25 µm after preliminary heat treatment to 3 - 8 µm after hot stamping. At the same time, the alloying degree and the microstructure structure of the Al-Si plating do not change significantly because of the low temperature and short time for temperature holding used in the process of hot stamping.

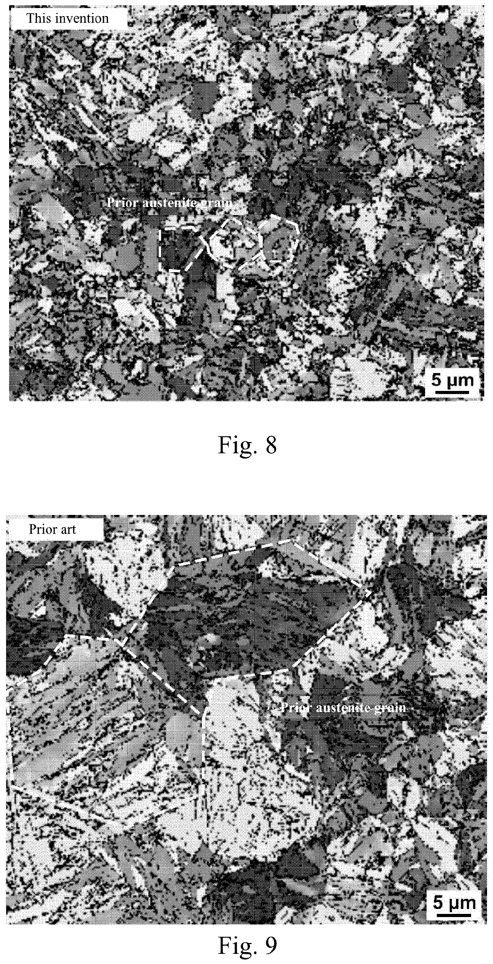

Fig. 8 is a microstructure inverse pole figure of the steel plate matrix after the process of hot stamping, in which the original austenite grain size in the steel plate matrix microstructure can be clearly observed, which is consistent with the original austenite grain size of 3 - 8 µm in Fig. 7.

As a comparison, Fig. 9 shows a microstructure inverse pole figure of the steel plate matrix obtained using the existing hot stamping technique shown in Fig. 2 (i.e. without performing the preliminary heat treatment). In this figure, the original austenite grain size is around 20 µm. The process of the currently existing hot stamping does not have a preliminary heat treatment, and need a relatively high temperature for heating and temperature holding and a relatively long time for heating and temperature holding, for example, 900-940 °C, 5-10 minutes, and, in the process of the existing hot stamping, the initial microstructure is a structure of ferrite + laminar pearlite + spherulitic carbide, which cannot play a role of refining the austenite grains by the martensite or bainite structure. Therefore, the original austenite grains in the steel plate matrix obtained by the process of the currently existing hot stamping are much larger than those obtained by the process of the hot stamping of the invention.

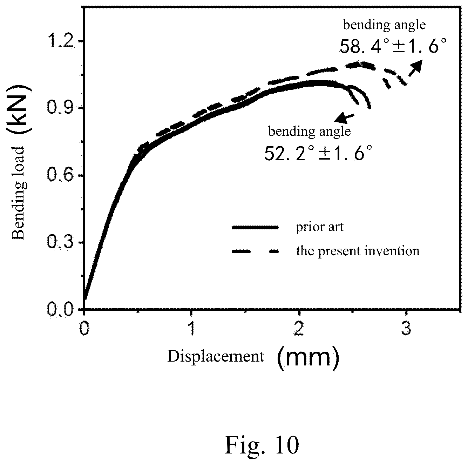

In Fig. 10, three-point bending test results of the steel plate obtained according to the currently existing hot stamping method and the hot stamped steel plate obtained according to the method of the invention was shown and compared. The three-point bending test results of the steel plate after hot stamping may reflect the fracture performance of the hot stamped member. The three-point bending test results illustrate that, compared to the currently existing hot stamping techniques, the hot stamped steel plate obtained according to the invention can reach a greater bending load and a greater bending angle, wherein the greatest bending load obtainable according to the invention is around 1100 N, bending angle is around 58.4°, the maximum bending load obtained in the prior art is around 1000 kN with the bending angle of around 52.2°, i.e., the greatest bending load is increased by 10% while the bending angle is increased by 11.9%. Thus, the steel plate after hot stamping of the invention has a better three-point bending property, and accordingly, the fracture performance of the hot stamped member is improved.

It can be seen from the above embodiments, the method of the invention can improve the alloying degree of the pre-coating layer and the fracture performance of the steel plate matrix at the same time. The reasons of improving the fracture performance of the steel plate matrix are as follows: the hot stamping technique described in the invention can distribute carbon element in the matrix more uniformly and refine the original austenite grains, the martensite lath bundle, the martensite lath block and the martensite lath in the microstructure in the hot stamped member. On one hand, refining the grains mentioned above may reduce the enrichment of impurity element such as phosphorus, sulphur, etc. and hydrogen at grain boundary, alleviate the adverse impact of the impurity element and hydrogen on the fracture of grain boundary, and thus suppress the brittle intergranular fracture. On the other hand, by refining of the grains, the cracks need to pass through more high angle grain boundary during expanding, including the original austenite grain boundaries, the martensite lath bundle boundaries, martensite lath block boundaries, etc., and thus the expanding of the cracks needs more energy and has more difficulty to finally improve the fracture performance of the hot stamped member.

The explanation of embodiments above are given for the purpose of illustration and description. Those skilled in the art will understand that the invention is not limited to these embodiments or testing data. The data and parameters recorded in the embodiments are only exemplary, which cannot constitute any limitation on the invention.

## Claims

1. A hot stamping method for pre-coated steel plate, comprising performing a hot stamping on a pre-coated steel plate using a die at a hot stamping temperature to obtain a hot stamped component, **characterized in that** the method further comprises performing a preliminary heat treatment to the pre-coated steel plate before the hot stamping, the preliminary heat treatment comprising:
(1) a step of heating and temperature holding: heating the pre-coated steel plate to 850 - 920 °C and temperature holding for 7 to 15 minutes, or heating to 920 - 960 °C and temperature holding for 5 to 10 minutes, for austenitizing pre-coated steel plate matrix and alloying a pre-coating layer;
(2) a step of cooling: cooling the pre-coated steel plate to below 300 °C after the step of heating and temperature holding at a cooling rate not less than 5 °C/s; and
(3) optionally, repeating the above step of heating and temperature holding and the step of cooling one or more times.

2. The hot stamping method according to claim 1, wherein in addition to ferrum, the pre-coated steel plate matrix comprises the following composition represented by weight percentage:
carbon 0.2-0.4%; manganese 0.5-1.5%; boron 0-0.005%; one or more alloying element(s) not more than 1%, selected form aluminum, silicon, chromium, molybdenum, niobium, vanadium; and other inevitable impurities; or
the pre-coated steel plate matrix further comprises the following composition represented by weight percentage: carbon 0.3-0.5%; manganese 0.5-2.5%; boron 0-0.005%; one or more alloying element(s) not more than 3%, selected form aluminum, silicon, chromium, molybdenum, niobium, vanadium; and other inevitable impurities;
preferably, the pre-coated steel plate matrix has a thickness of 0.8 - 2.5 mm.

3. The hot stamping method according to claim 1, wherein the pre-coating layer is aluminum or aluminum alloy, preferably aluminum alloy, more preferably Al-Si alloy; preferably, the pre-coating layer has a thickness of 6 - 36 µm, more preferably 15 - 27 µm.

4. The hot stamping method according to any one of claims 1 to 3, wherein when the thickness of the pre-coating layer is less than 20µm, the step of heating and temperature holding uses: 850 - 920 °C, 7 to 15 minutes; when the thickness of the pre-coating layer is greater than or equal to 20 µm, the step of heating and temperature holding uses: 920 - 960 °C, 5 to 10 minutes.

5. The hot stamping method according to any one of claims 1 to 3, wherein the cooling rate is not less than 10 °C/s; more preferably, the cooling rate is not less than 25 °C/s, most preferably, the cooling rate is 25 °C/s to 50 °C/s;
preferably, deforming the pre-coated steel plate using a stamping die during the cooling of the step (2).

6. The hot stamping method according to any one of claims 1 to 3, wherein the pre-coated steel plate matrix after the preliminary heat treatment has a microstructure with the following features:
(a) martensite or of bainite or both with volume fraction no less than 30%;
(b) no spherulitic carbide grains with grain diameter greater than 0.5 µm, and no laminar pearlite colony with grain diameter greater than 1 µm.

7. The hot stamping method according to any one of claims 1 to 3, wherein the pre-coating layer after the preliminary heat treatment has a microstructure composed of one or more intermetallic compound(s) and ferrite, wherein FeAl phase has a volume fraction of not less than 60% among all intermetallic compound(s).

8. The hot stamping method according to any one of claims 1 to 3, wherein the method further comprises: after the preliminary heat treatment, reheating the pre-coated steel plate to 780 - 940 °C and temperature holding for 1 to 7 minutes, for completely austenitizing the pre-coated steel plate matrix; then keeping the temperature above 500 °C and transferring the pre-coated steel plate to the die for hot stamping;
preferably, the method additionally comprises: after the preliminary heat treatment, reheating the pre-coated steel plate to 830 - 900 °C and temperature holding for 1 to 4 minutes, for completely austenitizing the pre-coated steel plate matrix; then, keeping the temperature above 600 °C and transferring the pre-coated steel plate to the die for hot stamping.

9. The hot stamping method according to any one of claims 1 to 3, wherein a microstructure of the pre-coated steel plate matrix after hot stamping is a full martensite structure; or
a microstructure of the pre-coated steel plate matrix after hot stamping is a mixed structure composed of two or more phases selected from ferrite structure, bainite structure, martensite structure, and austenite structure.

10. The hot stamping method according to any one of claims 1 to 3, wherein a microstructure of the pre-coated steel plate matrix after hot stamping has an original austenite grain size not greater than 18 µm, preferably not greater than 10 µm.
